# EUROPEAN PATENT APPLICATION

(11) **EP 3 196 764 A1**
(43) Date of publication of application: **26.07.2017**
(21) Application number: 14902212.1
(22) Date of filing: 31.10.2014
(51) Int. Cl.: G06F 9/48

(54) **RAPID DUAL-SYSTEM SWITCHING METHOD, APPARATUS AND TERMINAL**

(30) Priority: 17.09.2014 CN 201410473944
(71) Applicant: Yulong Computer Telecommunication Scientific (Shenzhen) Co. Ltd., Shenzhen, Guangdong 518057 (CN)
(72) Inventor: YE, Ruiquan, Shenzhen Guangdong 518057 (CN); TAN, Weitao, Shenzhen Guangdong 518057 (CN)
(74) Representative: Cordina, Kevin John
(86) International application number: PCT/CN2014/090124
(87) International publication number: WO 2016/041240

(57) **Abstract**

The present disclosure discloses a fast switching method, device and terminal of a dual system, the method includes: A, creating a short-cut icon of an application of a second system according to an input creation instruction, and displaying the short-cut icon in a first system; B, switching to the second system and running the application corresponding to the short-cut icon when the short-cut icon is triggered. The present disclosure can directly start the application of the second system by means of the short-cut icon, switching operations between the dual system are simplified, and it is convenient for the user to use.

## Description

### CROSS-REFERENCE TO RELATED APPLICATIONS

This application claims priority of Chinese Patent Application No. 201410473944.0, entitled "fast switching method, device and terminal of dual system," filed on September 17, 2014 in the SIPO (State Intellectual Property Office of the People's Republic of China), the entire contents of which are incorporated by reference herein.

### FIELD

The embodiments of the present disclosure relate to technology field of a dual system, and specifically to a fast switching method, a device and a terminal of a dual system.

### BACKGROUND

A dual system represents that two operating systems are installed in a terminal (the two systems are installed in different partitions, a system installed subsequently does not cover a system installed previously, the two systems can communicate with each other, but functions of the two systems are completely independent). After turning on, a default system is accessed firstly, when in use, in order to facilitate a user to use functions of the other system, a system switch is set to switch systems.

After turning on, the two systems are in operation. If the user wants to use a function of the other system, the user needs to click on a system switch button firstly and input a security password of the other system, and a function menu of the other system is accessed when the password is correct, then a corresponding function application is selected to run. Thus, when it is needed to use different functions of the two systems, it needs to switch between the two systems back and forth, the operations is complex and it is inconvenient for the user to use.

### SUMMARY

In view of the disadvantages of the prior art, the purpose of the present disclosure is to provide a fast switching method, a device and a terminal of a dual system, to solve a problem of a current inconvenient switching operation of a dual system.

For the above mentioned purpose, the technical solution adopted by the present disclosure is as follows:
A fast switching method of a dual system includes:
   A, creating a short-cut icon of an application of a second system according to an input creation instruction, and displaying the short-cut icon in a first system;
   B, switching to the second system and running the application corresponding to the short-cut icon when the short-cut icon is triggered.

In the fast switching method of a dual system, step A includes:
A1, marking the short-cut icon to be belonged to the application of the second system when the first system displays the short-cut icon.

In the fast switching method of a dual system, step B includes:
B1, when a short-cut icon in the first system is triggered, determining whether the triggered short-cut icon is belonged to an application of the second system, if yes, step B2 is executed; if not, step B3 is executed;
B2, switching to the second system and running the application corresponding to the short-cut icon;
B3, running an application corresponding to the short-cut icon in the first system.

In the fast switching method of a dual system, before step B2, the method further includes:
B21, popping up a password box to prompt a user to input a password for verifying, and executing B2 after the password is verified to be correct.

In the fast switching method of a dual system, after step B, the method further includes:
switching to the first system when the application corresponding to the short-cut icon is exited.

A fast switching device of a dual system, includes:
a creation module used to create a short-cut icon of an application of a second system according to an input creation instruction;
a display module used to display the short-cut icon in a first system;
a switching module used to switch to the second system and run the application corresponding to the short-cut icon when the short-cut icon is triggered.

The fast switching device of a dual system further includes:
A marking module used to mark the short-cut icon to be belonged to the application of the second system when the first system displays the short-cut icon.

In the fast switching device of a dual system, the switching module includes:
a determination unit used to determine whether a triggered short-cut icon is belonged to an application of the second system when a short-cut icon in the first system is triggered;
a system switching unit used to switch to the second system and run the application corresponding to the short-cut icon when the triggered short-cut icon is belonged to an application of the second system;
a running unit used to run an application corresponding to the short-cut icon in the first system when the triggered short-cut icon is not belonged to an application of the second system.

In the fast switching device of a dual system, the switching module further includes:
a verification unit used to pop up a password box to prompt a user to input a password for verifying, and a switching being executed after the password is verified to be correct.

A terminal includes the fast switching device of a dual system.

Compared with the prior art, the fast switching method, device and terminal of a dual system provided by the present disclosure, creates a short-cut icon of an application of a second system according to an input creation instruction, and displays the short-cut icon in a first system; switch to the second system and run the application corresponding to the short-cut icon when the short-cut icon is triggered. By starting the application of the second system directly via the short-cut icon, a switching operation between the dual system is simplified and it is convenient for a user to use.

### BRIEF DESCRIPTION OF THE DRAWINGS

FIG. 1 is a flowchart of a fast switching method of a dual system provided in one embodiment of the present disclosure;
FIG. 2 is a structure diagram of a fast switching device of a dual system provided in one embodiment of the present disclosure.

### DETAILED DESCRIPTION

The present disclosure provides a fast switching method, device and terminal of a dual system. In order to make the purpose, technical solution and effect more clearly and definitely, with reference to the accompanying drawings, embodiments are provided as follows to describe the present disclosure in further detail. It should be understood that the specific embodiments described herein are merely used to explain the present invention and are not intended to limit the present disclosure.

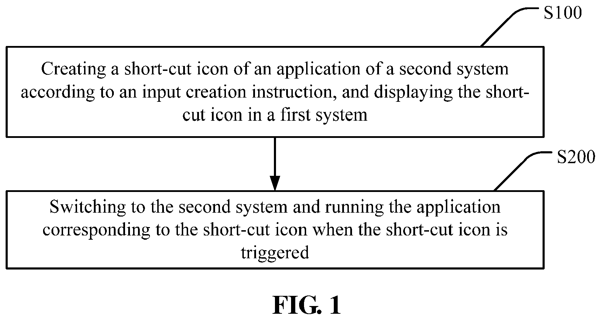

For a problem that it is troublesome to switch between systems in a terminal having a dual system, the present disclosure provides a fast switching method, device and terminal of a dual system. By creating a short-cut icon of an application of the other system according to an input creation instruction and displaying the short-cut icon on a desktop of a current system; the short-cut icon can be clicked to switch to the other system and run the application corresponding to the short-cut icon. Referring to FIG. 1, a fast switching method of a dual system, provided in one embodiment of the present disclosure, includes:
S100, creating a short-cut icon of an application of a second system according to an input creation instruction, and displaying the short-cut icon in a first system;
S200, switching to the second system and running the application corresponding to the short-cut icon when the short-cut icon is triggered.

In the embodiment, the first system and the second system are in operation simultaneously. When a user selects the first system to be a current operating system, the second system is running in a silent mode in the background. Each function application of the second system is in a standby state. When the user is working or playing, some specific applications of the two systems are often being used. Therefore, the user may create a short-cut icon of an application of the second system, specifically the user may enter an operating environment of the second system firstly, select an application often used in the second system, and create its short-cut icon. When the second system is exited, the short-cut icon is displayed on a desktop of the first system, this is equivalent to place an entry of the application of the second system on the desktop of the first system. If the user triggers the short-cut icon of the application of the second system, it can switch to the second system and run the application. There are a plurality of manners for the user to trigger the short-cut icon of the application of the second system, the manners can be clicking or long pressing, and the manners to trigger the short-cut icon of the application of the second system are not limited in the present disclosure. By utilizing the technology solution, the user directly accesses an operating interface of the application of the second system from the first system. Although no switching procedure is displayed, and an operating interface and function menus of the second system are not displayed, however, in fact, a switching has been carried out automatically in the background. Thus, manual complex operations of the user to switch systems and to start corresponding applications in prior art can be reduced, and it is convenient for the user to use.

One inputting manner of the creation instruction may be popping up a function menu when an icon of an application of the second system is triggered. When a function item of "creating a short-cut icon in the first system" is selected from the function menu, it is represented that a creation instruction of the application is input. In other embodiments, the inputting manner of the creation instruction also may be dragging the application of the second system to a predetermined position, that is equivalent to input the creation instruction of the application. For example, an icon creation box is set up on a desktop of the second system, when the application is dragged into the icon creation box, it is represented that the creation instruction of the application is input. All of other embodiments to input a creation instruction for creating a short-cut icon are within a protective range of the present disclosure, and inputting manners of the creation instruction are not limited by the embodiments.

As the first system also has short-cut icons of some applications, in order to help the user to distinguish whether an application is belonged to the first system or the second system, the step S100 further includes: marking the short-cut icon to be belonged to the application of the second system when the first system displays the short-cut icon. For example, a label, such as "2" or "OS2 (operating system)", can be appended on the short-cut icon of the application belonged to the second system, thus it is explicit for the user that the application is belonged to the second system. The short-cut icon of the application belonged to the second system also can be blurred or displayed transparently, or added a border around the short-cut icon, to distinguish each short-cut icon belonged to the first system. Marking manners are not limited in the embodiment

As the desktop of the first system displays short-cut icons belonged to the first system and short-cut icons belonged to the second system, when the user triggers one short-cut icon, in the embodiment, it is firstly determined that the triggered short-cut icon is belonged to which system and then processed correspondingly. Accordingly, step S200 includes:
Step 1, when a short-cut icon in the first system is triggered, determining whether the triggered short-cut icon is belonged to an application of the second system, if yes, step 2 is executed; if not, step 3 is executed;
Step 2, switching to the second system and running the application corresponding to the short-cut icon;
Step 3, running an application corresponding to the short-cut icon in the first system.

In the embodiment, by determining marks/labels of the short-cut icon, belonging of the short-cut icon can be identified. If a mark indicates that a short-cut icon is belonged to an application of the second system, it is represented that the application of the second system needs to run, and step 2 mentioned above is executed to switch the systems. If there is no related mark, it is represented that the short-cut icon is belonged to the first system, and step 3 is executed to run the application normally. Thus, each application of the first system can run normally without influence, and switching to the application of the second system can also be ensured.

In the embodiment, before switching to the second system, validity of the user needs to be verified. That is, before step 2, the embodiment further includes popping up a password box to prompt the user to input a password for verifying, and executing step 2 when the password is verified to be correct. If the user inputs a wrong password, when times of inputting wrong passwords by the user is less than predetermined times (e.g., three times) that allows the user to input wrong passwords, the user is prompted to input again. If the times of inputting wrong passwords by the user exceeds the predetermined times, switching is prompted to be failed.

It should be understood that, in the embodiment, after the password is verified to be valid for one time, no more password verification is executed subsequently when short-cut icons of other applications of the second system are triggered, thereby saving operating time of the user. If the user has a demand of security settings, a password can be set to each short-cut icon when creating each short-cut icon. Thus a corresponding password needs to be input for verification when a short-cut icon of a corresponding application is triggered.

After the password is verified to be correct, in the embodiment, following operations are executed quickly in the background: switching to the second system firstly, and an application running module in the second system starts to run the application. The operating interface of the application is displayed on an interface of the terminal directly, a switching operation, a running operation, and other operations executed in the background are not displayed on a display screen. Thus, time for the user to access the operating interface of the second system to search for corresponding application(s) can be reduced, and it is convenient for the user to use.

When the user exits the application of the second system, the second system is exited automatically to switch to the first system. An operating interface of the first system displayed before switching is restored, so as to ensure the user to restore a working or entertainment state before switching quickly.

If the user merely minimizes an operating window of the application of the second system, it is also switched to the first system and displayed the operating interface of the first system displayed before switching, the user may continue various operations in the first system. At this moment, the application of the second system is also running in a silent mode in the background without influencing running of the first system. When the user restores the operating window of the application of the second system, it is switched to the operating environment and the operating interface of the second system again, and corresponding application of the first system is running in the background.

It should be understood that, a relation between the first system and the second system in the embodiment is a paratactic relation, they are not distinguished to be primary or secondary. If the first system is started after power on, short-cut icons of applications of the second system can be displayed in the first system. If the second system is selected to start after power on, short-cut icons of applications of the first system can be displayed in the second system.

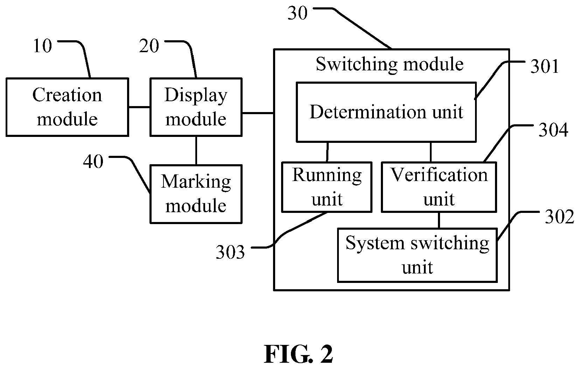

Based on the above mentioned fast switching method of a dual system, one embodiment of the present disclosure further provides a fast switching device of a dual system. The fast switching device is applied in a terminal that has been installed a dual system. Referring to FIG. 2, the of a dual system includes a creation module 10, a display module 20, and a switching module 30. The creation module 10, the display module 20, and the switching module 30 are connected in sequence. The creation module 10 creates a short-cut icon of an application of a second system according to an input creation instruction. The display module 20 is used to display the short-cut icon of the application of the second system on a function interface (namely a desktop) of a first system. The switching module 30 is used to switch to the second system and run the application corresponding to the short-cut icon when the short-cut icon is triggered.

In order to help the user to distinguish which system is the short-cut icon belonged to, the fast switching device further includes a marking module 40, which is used to mark the short-cut icon to be belonged to the application of the second system when the first system displays the short-cut icon. Correspondingly, if the second system displays short-cut icons of applications of the first system, the marking module 40 marks the short-cut icons to be belonged to the applications of the first system.

The switching module 30 includes:
a determination unit 301, which is used to determine whether a triggered short-cut icon is belonged to an application of the second system when a short-cut icon in the first system is triggered;
a system switching unit 302, which is used to switch to the second system and run the application corresponding to the short-cut icon when the triggered short-cut icon is belonged to an application of the second system;
a running unit 303, which is used to run an application corresponding to the short-cut icon in the first system when the triggered short-cut icon is not belonged to an application of the second system.

In order to verify the validity of the user, the switching module 30 further includes a verification unit 304, which is used to pop up a password box to prompt the user to input a password for verifying, and control the system switching unit 302 to switch after the password is verified to be correct.

In the embodiment, the system switching unit 302 is further used to switch to an operating environment of the first system when the application of the second system is exited.

Another embodiment of the present disclosure further provides a terminal, which includes the fast switching device of a dual system as mentioned above.

In conclusion, the present disclosure creates a short-cut icon of an application of a second system according to an input creation instruction and displays the short-cut icon in a first system; switches to the second system and runs the application corresponding to the short-cut icon when the short-cut icon of the application of the second system is determined to be triggered. The present disclosure can directly start the application of the second system by means of the short-cut icon, switching operations between the dual system are simplified, and it is convenient for the user to use.

It can understood that, according to the technical solution of the present disclosure and its inventive concept, one skilled in the art will understand that can make equivalent replacements or changes, and all such changes and replacements should be within the protective scope of the following claims in the present disclosure.

## Claims

1. A fast switching method of a dual system, comprising:
A, creating a short-cut icon of an application of a second system according to an input creation instruction, and displaying the short-cut icon in a first system;
B, switching to the second system and running the application corresponding to the short-cut icon when the short-cut icon is triggered.

2. The fast switching method of a dual system of claim 1, wherein step A comprises:
A1, marking the short-cut icon to be belonged to the application of the second system when the first system displays the short-cut icon.

3. The fast switching method of a dual system of claim 2, wherein step B further comprises:
B1, when a short-cut icon in the first system is triggered, determining whether the triggered short-cut icon is belonged to an application of the second system, if yes, step B2 is executed; if not, step B3 is executed;
B2, switching to the second system and running the application corresponding to the short-cut icon;
B3, running an application corresponding to the short-cut icon in the first system.

4. The fast switching method of a dual system of claim 3, before step B2, further comprising:
B21, popping up a password box to prompt a user to input a password for verifying, and executing B2 after the password is verified to be correct.

5. The fast switching method of a dual system of claim 1, after step B, further comprising:
switching to the first system when the application corresponding to the short-cut icon is exited.

6. A fast switching device of a dual system, comprising:
a creation module used to create a short-cut icon of an application of a second system according to an input creation instruction;
a display module used to display the short-cut icon in a first system;
a switching module used to switch to the second system and run the application corresponding to the short-cut icon when the short-cut icon is triggered.

7. The fast switching device of a dual system of claim 6, further comprising:
a marking module used to mark the short-cut icon to be belonged to the application of the second system when the first system displays the short-cut icon.

8. The fast switching device of a dual system of claim 6, wherein the switching module comprises:
a determination unit used to determine whether a triggered short-cut icon is belonged to an application of the second system when a short-cut icon in the first system is triggered;
a system switching unit used to switch to the second system and run the application corresponding to the short-cut icon when the triggered short-cut icon is belonged to an application of the second system;
a running unit used to run an application corresponding to the short-cut icon in the first system when the triggered short-cut icon is not belonged to an application of the second system.

9. The fast switching device of a dual system of claim 8, wherein the switching module further comprises:
a verification unit used to pop up a password box to prompt a user to input a password for verifying, and a switching being executed after the password is verified to be correct.

10. A terminal comprising the fast switching device of a dual system of any of claims 6 to 9.
